# EUROPÄISCHE PATENTSCHRIFT

(11) **EP 2 657 212 B1**
(45) Veröffentlichungstag und Bekanntmachung des Hinweises auf die Patenterteilung: **30.03.2016**
(21) Anmeldenummer: 13164758.8
(22) Anmeldetag: 22.04.2013
(51) Int. Cl.: C05F 9/04, C05F 17/00

(54) **VERFAHREN ZUR AUFBEREITUNG VON ORGANISCHEN ABFALLSTOFFEN UND KOMPOSTEN, INSBESONDERE VON GÄRRESTEN AUS BIOGASANLAGEN**
METHOD FOR THE TREATMENT OF ORGANIC WASTE MATERIALS AND COMPOSTS, ESPECIALLY FOOD REMAINS FROM BIOGAS SYSTEMS
PROCÉDÉ DE TRAITEMENT DE DÉCHETS ORGANIQUES ET DE COMPOSTS, NOTAMMENT DE RÉSIDUS DE FERMENTATION ISSUS D'INSTALLATIONS DE BIOGAZ

(30) Priorität: 23.04.2012 DE 102012007900
(43) Veröffentlichungstag der Anmeldung: 30.10.2013
(73) Patentinhaber: Sagterland-Dünger GmbH & Co. KG, 48485 Neuenkirchen (DE)
(72) Erfinder: Dresselhaus, Ernst, 48485 Neuenkirchen (DE)
(74) Vertreter: Ahrens, Gabriele

(56) Entgegenhaltungen:
- EP-A1- 0 481 541
- WO-A1-03/101914
- WO-A1-2010/130589
- CA-A1- 2 416 690
- CH-A5- 633 498
- GB-A- 422 061
- GB-A- 753 566
- NL-A- 8 202 737
- US-A- 3 947 350

## Beschreibung

Die vorliegende Erfindung betrifft ein Verfahren zur Aufbereitung von organischen Abfallstoffen wie Gärresten aus Biogasanlagen, aber auch von Komposten. Insbesondere betrifft die vorliegende Erfindung ein Verfahren, mit dem aus den organischen Abfallstoffen ein sauberes unbelastetes, möglichst trockenes organisches Substrat zur Wiederverwertung erhalten werden kann.

In Biogasanlagen wird aus Biomasse durch anaerobe Vergärung Biogas gewonnen, das als Hauptbestandteile Methan und Kohlendioxid enthält. Durch Verbrennung von Methan in einem Blockheizkraftwerk wird Strom und Wärme erzeugt. Der Strom wird in das Netz eingespeist.
Ein Teil der Wärme wird in den Vergärungsprozess zurückgeführt. Die Nutzung des überschüssigen Wärmeanteils hängt von der Verfügbarkeit von geeigneten Verbrauchern ab.

Als Biomasse für die Gewinnung von Biogas werden nachwachsende Rohstoffe (NawaRo) wie Pflanzen aber auch Rückstände aus der Tierhaltung wie Gülle oder Mist sowie biologische Abfälle wie Speisereste etc. verwendet.

Nicht jede Art von Biomasse eignet sich gleichermaßen zur Biogaserzeugung, so dass nichtvergärbare Rückstände zurückbleiben. Diese sogenannten Gärreste machen etwa ein Drittel der eingesetzten Biomasse aus, und sind flüssig bis zähflüssig und haben einen hohen Wasseranteil.
Üblicherweise liegt, je nach Vergärungsprozess, der Trockensubstanzgehalt der Gärreste zwischen 6 bis 7 %, das heißt der Flüssigkeitsanteil beträgt 93-94 %.

Neben organischen Substanzen enthalten Gärreste erhebliche Mengen an pflanzenverfügbaren Nährstoffen wie Stickstoff, Phosphor und Kalium in Form ihrer Salze. Aufgrund des hohen Nährsalzgehalts werden die Gärreste ähnlich wie Gülle als Düngemittel eingesetzt. Von Nachteil ist jedoch, dass in den Wintermonaten und der gesamten Vegetationszeit kein Gärrest auf landwirtschaftliche Nutzflächen ausgebracht werden kann und darf. Während dieser Zeit müssen Gärreste gelagert werden und es kann und müssen hierfür entsprechende Lagerkapazitäten geschaffen werden.

Zur Erhöhung der Lagerkapazität wurde deshalb vorgeschlagen, die flüssigen Gärreste zu festen Düngemittelformkörpern zu verarbeiten. Ein Beispiel für ein Verfahren zur Herstellung von Düngemittelformkörpern aus Gärresten aus Biogasanlagen findet sich in DE 10 2005 048 116 A1.

Eine ausreichende Nährsalzzufuhr fördert zwar das Pflanzenwachstum, jedoch führt übermäßiger Nährstoffeintrag zu Umweltproblemen, wie der Verschmutzung von Gewässern und Grundwasser, und ist daher zu vermeiden.

Beispielsweise ist es bekannt, dass Stickstoffverbindungen, die an die Umwelt abgegeben werden, auf verschiedene Weisen schädlich sein können. Sie führen in hoher Konzentration zu einer Überdüngung des Bodens oder von Gewässern. Eine übermäßige Düngung von Gewässern führt zu starken Algenwachstum und zu einer Verminderung der Wasserqualität bis hin zu einem möglichen Umkippen der Gewässer.

In Hinblick auf die steigende Bedeutung der Energiegewinnung aus nachwachsenden Rohstoffen und auf deren hohen Nährsalzgehalt können daher auf Dauer nicht alle im Rahmen der Biogaserzeugung anfallenden Gärreste als Düngemittel, zum Beispiel in der Landwirtschaft, verwertet werden.

Ein weiterer Nachteil der Verwendung der Gärreste als Düngemittel ist, dass deren Nährstoffzusammensetzung und -gehalt in Abhängigkeit der Art der verwendeten Biomasse Schwankungen unterliegt.

Kompost ist ein wertvoller Pflanzendünger und Humuslieferant. Er sollte jedoch aufgrund seines hohen Nährstoffgehalts nur dosiert beziehungsweise mit anderen Substraten verdünnt eingesetzt werden. Eine Reduzierung des Nährstoffgehalts, insbesondere von Phosphor, Kalium und/oder Stickstoff, kann Kompost für Anwendungen verfügbar machen, für die er aufgrund seines hohen Nährstoffgehalts andernfalls ungeeignet ist.

Beispielsweise können bei der Blumenerdeherstellung höchstens 20 bis 30 % Kompost dem Torf beigemischt werden, da ansonsten die Salzgehalte wie P-, K-, und N-haltige Salze, in den Blumenerden zu hoch werden und darin gepflanzte Pflanzen geschädigt werden oder sogar eingehen könnten.

DE 10 2009 020 745 A1 beschreibt ein Verfahren zur Gewinnung von Wertstoffen, insbesondere Phosphat, aus Klärschlamm oder Klärschlammasche, wobei der Klärschlamm beziehungsweise die Klärschlammasche zunächst in Wasser und/oder Ethanol suspendiert wird, gasförmiges Kohlendioxid oder überkritisches Kohlendioxid als Extraktionsmittel in die Suspension eingeleitet, ungelöste Feststoffe von den flüssigen Suspendiermitteln abgetrennt, Kohlendioxid aus dem Suspendiermittel entfernt und die in dem Suspendiermittel gelösten Wertstoffe ausgefällt und abgetrennt werden. Klärschlammasche wird durch Verbrennung der organischen Bestandteile aus Klärschlamm erhalten. Klärschlammasche wie Klärschlamm enthalten hohe Gehalte an Schwermetallen, wie Chrom, Kupfer, Nickel und Blei, wobei zusätzlich in Klärschlamm noch organische Schadstoffe enthalten sind. Diese Schwermetall- und Giftstoffbelastung ist in dem bei diesem Verfahren abgetrennten Feststoffen noch enthalten, sodass diese Feststoffe nicht für die Verwertung in der Landwirtschaft und im Gartenbau geeignet sind.

In Biogas-Infoboard: Norddeutsche Biogas-Tagung in Hildesheim, 10. bis 12. Juni 2005, Seiten 161 bis 168 wird die Verwendung von Gülle oder Biogärresten aus Gülle als Erdverbesserungsdünger beziehungsweise Festdünger beschrieben. Falls gewünscht kann überschüssiger Phosphor durch Zugabe eines Fällungsmittel zu der flüssigen Gülle beziehungsweise zu dem noch einen hohen Flüssigkeitsgehalt aufweisenden Gärrest entfernt werden. Die erhaltenen Suspensionen werden dann bis zu einem Trockensubstanzgehalt von 32 bis 38 % entwässert und in Container für die weitere Verwertung abgefüllt.

In NL8202737 wird eine Vorrichtung für die anaerobe Kompostierung von organischen Materialien beschrieben, wobei Wasserdampf zum Einsatz kommt.

CH633498 A5 beschreibt ein Verfahren zur Aufbereitung von Klärschlamm zu verwendbaren Produkten, wobei für die Aufbereitung Halogenkohlenwasserstoffe, wie Perchlorethylen, 1,2-Dichlorethan etc. als Lösungsmittel verwendet werden.

Kerngedanke der vorliegenden Erfindung ist die Reduktion des Gehalts an Nährstoffen in organischen Abfällen, insbesondere in Gärresten, aber auch von Kompost, um deren organische Substanz als organisches Substrat der Weiterverwertung zuführen zu können.

Nachfolgend wird zwar überwiegend auf "organische Abfallstoffe" abgestellt, jedoch soll damit auch Kompost erfasst werden, für den die nachfolgende Beschreibung gleichermaßen Gültigkeit hat.

Die vorliegende Erfindung betrifft ein Verfahren zur Reduktion des Nährstoffgehalts von organischen Abfallstoffen, indem die organischen Abfallstoffe mit verflüssigtem Kohlendioxid gewaschen werden.

Unter Nährstoffgehalt wird erfindungsgemäß insbesondere der Anteil an organischen und mineralischen Pflanzen-Nährstoffen, einschließlich in Form ihrer Salze verstanden, wie sie üblicherweise in organischen Abfällen, insbesondere in Gärresten, vorliegen. Wesentliche Nährstoffe sind Stickstoff, Phosphor und Kalium und zudem Calcium und Magnesium.

Da die Nährstoffe in den organischen Abfallstoffen in der Regel in Form von Salzen vorliegen, betrifft das erfindungsgemäße Verfahren damit insbesondere ein Verfahren zur Entsalzung von organischen Abfallstoffen.

Organische Abfallstoffe im Sinne der vorliegenden Erfindung sind insbesondere Gärreste, wie sie als organischer Rückstand in Biogasanlagen erhalten werden.

Gemäß einem weiteren Aspekt betrifft die vorliegende Erfindung ein organisches Substrat, das durch Reduktion des Nährstoffgehalts von organischen Abfallstoffen, insbesondere von Gärresten aus Biogasanlagen, aber auch von Kompost erhalten wird.

Gemäß einem weiteren Aspekt betrifft die vorliegende Erfindung die Verwendung eines organischen Substrats, das durch Reduktion des Nährstoffgehalts von organischen Abfallstoffen, insbesondere von Gärresten aus Biogasanlagen, aber auch von Kompost erhalten wird, insbesondere als Pflanzerde, Blumenerde, Torfersatz, Bodenverbesserer, Holzfaserersatz sowie Einstreu zur Papierverarbeitung.

Nach dem erfindungsgemäßen Verfahren wird der organische Abfallstoff mit verflüssigtem Kohlendioxid gewaschen. Es wurde gefunden, dass das Kohlendioxid den Nährstoffgehalt des organischen Abfallstoffes erheblich reduziert und zudem unerwünschte Schwebstoffe wie organische Kleinstpartikel, aus dem organischen Abfallstoff entfernt.
Weiter findet eine Hygenisierung statt, wodurch die Bildung unangenehmer Gerüche verhindert oder zumindest erheblich reduziert wird.

Der Waschvorgang findet in einem Druckbehälter statt, in dem das Kohlendioxid unter einem Druck gehalten wird, bei dem es flüssig ist.

Der Waschvorgang wird vorzugsweise im Kreislauf durchgeführt.

Zur Beschleunigung des Waschvorgangs kann die Waschflüssigkeit mit den organischen Abfallstoffen in dem Druckbehälter bewegt werden. Beispielsweise kann hierfür der Druckbehälter als rotierender Behälter ausgebildet sein, in dem Druckbehälter Rührwerkzeuge vorgesehen werden, oder die Bewegung mittels Schall oder Ultraschall bewirkt werden. Es kann durch Hochleistungsimpulse, je nach Wahl der Leistungsparameter des Energiewandlersystems, zu Bewegungen, plastischer und/oder elastischer Verformung oder zu Zerkleinerung führen. Es können auch zwei oder mehrere diese Ereignisse auftreten.

Aufgrund seiner leichten Verfügbarkeit ist Kohlendioxid ein besonders geeignetes Waschgas. Vorteilhafterweise kann für den Waschvorgang ganz oder teilweise Kohlendioxid eingesetzt werden, das bei der Biogaserzeugung neben Methan als Hauptbestandteil gebildet wird. Dies ist besonders ökonomisch, da Kohlendioxid als solches nicht mehr oxidiert werden kann und daher keinen Brennwert besitzt.

Vorzugsweise wird der biologische Abfallstoff vor dem erfindungsgemäßen Waschvorgang getrocknet, um dessen Wassergehalt soweit wie möglich zu reduzieren. Für die Trocknung kann die Abwärme genutzt werden, die bei der Verbrennung von Biogas zur Stromerzeugung anfällt.

Der getrocknete Gärrest kann bis zu seiner Weiterverarbeitung mit dem erfindungsgemäßen Verfahren gelagert werden.

Es hat sich gezeigt, dass mit dem erfindungsgemäßen Verfahren neben dem Kalium- und Phosphorgehalt insbesondere der Stickstoffgehalt erheblich reduziert werden kann.

Es können dem Waschvorgang Zuschläge zugesetzt werden, die je nach Bedarf den Nährstoffgehalt in dem zu behandelnden biologischen Abfallstoff beziehungsweise dem organischen Substrat weiter herabsetzen können. Beispielsweise kann der Phosphorgehalt zusätzlich reduziert werden, indem ein geeigneter Zusatz zur Bindung von Phosphor zu dem Waschvorgang zugesetzt wird. Ein Beispiel für einen derartigen geeigneten Zusatz ist reaktives CalciumSilikat-Hydrat (CSH) wie es vom Phosphorrecycling aus Klärschlamm bekannt ist.

Nach Erreichen des gewünschten Reinheitsgrades wird der Waschvorgang beendet, indem das aufgereinigte organische Substrat dem Waschreaktor entnommen wird.

Ein Trockenvorgang nach dem Waschprozess mit Kohlendioxid ist nicht erforderlich, da die im gewaschenen Gärrest verbliebenen Rückstände an Kohlendioxid nach Druckentlastung in den gasförmigen Zustand übergehen und ausdampfen.

Das für den Waschvorgang verwendete Kohlendioxid kann anschließend in flüssiger Form erneut dem erfindungsgemäßen Waschvorgang zugeführt werden. Hierin liegt ein weiterer Vorteil des erfindungsgemäßen Verfahrens, da insgesamt nur ein geringer Teil des eingesetzten Kohlendioxids, der beispielsweise durch unvermeidliche Diffusion beziehungsweise Verdampfung in die Umgebung entweicht, ersetzt werden muss.

Vor Rückführung zu dem Waschprozess, können aus dem rückzuführenden Kohlendioxid die darin enthaltenen, abgetrennten Abfallstoffe wie Nährsalze und Schwebstoffe entfernt werden. Dies kann beispielsweise durch Entspannung des verflüssigten Kohendioxids erfolgen, wobei bei Verdampfung des Gases die darin enthaltenen Abfallstoffe zurückbleiben. Das gereinigte Kohlendioxid steht dann für einen weiteren Waschvorgang zur Verfügung.

Vorzugsweise ist der Wassergehalt des erfindungsgemäßen organischen Substrats 30 % oder weniger. Dadurch wird gegenüber von zum Beispiel herkömmlichen Blumenerden, die üblicherweise einen Wassergehalt von 30 bis 50 % aufweisen, eine erhebliche Gewichtsreduzierung und damit Einsparungen in den Frachtkosten erzielt.

Das nach dem erfindungsgemäßen Verfahren erhaltene gereinigte und entsalzte Substrat kann je nach Art der beabsichtigten Verwendung weiter verarbeitet werden, zum Beispiel zerkleinert oder pelletiert werden.

Das erfindungsgemäß erhaltene organische Substrat kann auf vielfache Art und Weise eingesetzt werden. Beispiele hierfür sind Pflanzerde, Blumenerde, Torfersatz, Bodenverbesserer, Holzfaserersatz, aber auch zur Einstreu, zur Papierverarbeitung usw.
Beispielsweise kann es vorteilhaft als Anzuchterde eingesetzt werden, da für Anzuchterde ein niedriger Nährstoffgehalt gewünscht ist, um die Wurzelbildung der Jungpflanzen anzuregen.
Es kann als Torfersatz verwendet werden und schont damit die Torfresourcen. Es eignet sich als Basis für Düngemittel. Anders als bei den Gärresten, wie sie aus Biogasanlagen erhalten werden und deren Nährstoffgehalt starken Schwankungen unterworfen ist, können dem erfindungsgemäß erhaltenen Substrat je nach Verwendungszweck die gewünschten Nährstoffe und Nährstoffgehalte beigemengt werden. So haben Blühpflanzen einen anderen Nährstoffbedarf als zum Beispiel Grünpflanzen. Es können damit je nach Anspruch der zu düngenden Pflanzen gezielt spezielle Pflanzensubstrate oder Düngemittel hergestellt werden.
Aufgrund seiner Struktur eignet sich das erfindungsgemäß erhaltene organische Substrat auch als Bodenverbesserer.
Das erfindungsgemäß erhaltene Substrat stellt zudem einen wertvollen Humusträger dar.

Auch können dem erfindungsgemäß erhaltenen organischen Substrat durch entsprechende Zusätze besondere Farben oder Eigenschaften verliehen werden. Beispielsweise kann durch Zusatz von Eisensulfat eine schwarze Färbung erzielt werden, wie sie zum Beispiel für Friedhofserde besonders gewünscht wird. Auch andere Färbungen sind denkbar, zum Beispiel zu Zierzwecken im Garten.

Nachstehend wird die vorliegende Erfindung anhand eines Beispiels näher erläutert.

### I) Analyse eines festen NawaRo-Gärrestes

**1. Zusammensetzung der Biomasse, aus der der Gärrest erhalten wurde:**

| Anteil | Bezeichnung |
|---|---|
| | |
| 54 % | Mais (Ganzpflanze) |
| 17 % | Rindergülle |
| 17 % | Schweinegülle |
| 12 % | Getreide (Korn) |

**2. Analyse des Gärrestes aus 1):**

| **Pflanzennährstoffe** | **Einheit** |
|---|---|
| | |
| Stickstoff, gesamt (N) | 1,08 % TM |
| Phosphat, gesamt (P₂O₅) | 3,20 % TM |
| Kaliumoxid, gesamt (K₂O) | 1,50 % TM |

**Bodenverbesserung**

| | |
|---|---|
| Organische Substanz | 74,4 % TM |
| Basisch-wirksame Bestandteile (CaO) | 2,30 % TM |

**Physikalische Parameter**

| | |
|---|---|
| Rohdichte | 690 g/l |
| Trockenmasse | 93,3 % FM |
| Salzgehalt | 12,2 G/l FM |
| pH-Wert | 7,2 |

| | |
|---|---|
| mit TM=Trockenmasse FM=Frischmasse | |

**Analyse des Gärrestes aus 1) (Angaben bezogen auf die Frischmasse):**

| Inhaltsstoff | % |
|---|---|
| | |
| Stickstoff, gesamt (N) | 1,01 |
| Phosphat, gesamt (P₂O₅) | 2,99 |
| Kaliumoxid, (K₂O) | 1,40 |
| | |
| Basisch-wirksame Bestandteile (CaO) | 2,15 |
| | |
| Organische Substanz | 69,4 |
| Humus-C | 14,1 |

(Humus-C ist der im Rahmen der Humusbilanz nach VD/LUFA anrechenbare humusreproduktionswirksame Kohlenstoff)

### II. Ergebnis nach Waschvorgang mit CO₂:

Das erhaltene organische Substrat war homogen, hatte eine Körnung von ca. 0 bis 10 mm und wies einen angenehmen Geruch auf.

| Vol.Gew. trocken g/l | pH-Wert (CaCl₂) | N (CaCl₂) mg/l | P₂O₅ (CAL) mg/l | K₂O (CAL) mg/l | Leitfähigkeit µS/cm | Salzg. (H₂O) g/l |
|---|---|---|---|---|---|---|
| | | | | | | |
| 84 | 7,1 | 8 | 5,26 | 65 | 70 | 0,15 |

Im Ergebnis zeigt sich, dass insbesondere der Stickstoff- und Kaliumgehalt signifikant reduziert werden konnte.

Das erfindungsgemäße Verfahren ermöglicht es, organische Abfallstoffe, insbesondere Gärreste aus Biogasanlagen, sowie Kompost einer über den Einsatz als Düngemittel hinausgehenden Verwertung zuzuführen, wobei die weitergehende Verwertung nicht durch den Gehalt an Nährstoffen in den organischen Abfallstoffen, insbesondere in Gärresten, sowie in dem Kompost eingeschränkt wird.

## Patentansprüche

1. Verfahren zur Herstellung eines organisches Substrates aus einem organischen Abfallstoff oder Kompost, wobei das organische Substrat geeignet ist für die Verwendung in der Landwirtschaft und im Gartenbau, wobei der Nährstoffgehalt des organischen Abfallstoffes oder Kompostes reduziert wird, indem der organische Abfallstoff oder Kompost mit verflüssigten Kohlendioxid gewaschen wird, die Feststoffe von dem verflüssigten Kohlendioxid abgetrennt werden und als organisches Substrat der Wiederverwertung zugeführt werden.

2. Verfahren nach Anspruch 1,
**wobei** der organische Abfallstoff ein Gärrest aus einer Biogasanlage ist.

3. Verfahren nach einem der Ansprüche 1 oder 2,
**wobei** der Nährstoff mindestens einer ausgewählt unter Stickstoff, Kalium und Phosphor ist.

4. Verfahren nach einem der vorhergehenden Ansprüche,
**wobei** der organische Abfallstoff oder Kompost getrocknet wird bevor er dem Waschvorgang mit verflüssigtem Kohlendioxid zugeführt wird.

5. Verfahren nach Anspruch 4,
**wobei** zur Trocknung Abwärme aus einer Biogasanlage eingesetzt wird.

6. Verfahren nach einem der vorhergehenden Ansprüche,
**wobei** Kohlendioxid aus einer Biogasanlage eingesetzt wird.

7. Verfahren nach einem der vorhergehenden Ansprüche,
**wobei** das Kohlendioxid im Kreislauf geführt wird.

8. Organisches Substrat, erhältlich nach einem Verfahren gemäß der Ansprüche 1 bis 7,
**wobei** das organische Substrat gegenüber dem organischen Abfallprodukt oder dem Kompost nach Durchführung des Waschvorgangs einen reduzierten Nährstoffgehalt aufweist, wobei der reduzierte Nährstoff mindestens einer ausgewählt unter Stickstoff, Phosphor und Kalium ist.

9. Verwendung des organischen Substrats nach Anspruch 8,
als Pflanzerde, Blumenerde, Torfersatz, Bodenverbesserer, Holzfaserersatz, als Einstreu, oder zur Papierverarbeitung.

## Claims

1. A method for the manufacture of an organic base from an organic waste material or compost, the organic base being suitable for use in agriculture and in horticulture, the nutrient content of the organic waste material or compost being reduced, wherein the organic waste material or compost is washed with liquefied carbon dioxide, the solids are separated from the liquefied carbon dioxide and are supplied as an organic base for recycling.

2. A method according to claim 1, wherein the organic waste material is a digestate from a biogas plant.

3. A method according to claim 1 or 2, wherein the nutrient is at least one selected from nitrogen, potassium and phosphorus.

4. A method according to one of the preceding claims, wherein the organic waste material or compost is dried before it is supplied to the washing process with liquefied carbon dioxide.

5. A method according to claim 4, wherein exhaust heat from a biogas plant is used for the drying process.

6. A method according to one of the preceding claims, wherein carbon dioxide form a biogas plant is used.

7. A method according to one of the preceding claims, wherein the carbon dioxide is guided in a circulation system.

8. An organic base obtainable by a method according to claims 1 to 7, wherein the organic base, after undergoing the washing process, has a reduced nutrient content compared to the organic waste material or the compost, the reduced nutrient being at least one selected from nitrogen, phosphorus or potassium.

9. Use of the organic base according to claim 8, as potting soil, potting compost, peat substitute, soil conditioner, wood fibre substitute, as litter or for paper processing.

## Revendications

1. Procédé servant à fabriquer un substrat organique à partir de déchets organiques ou de compost, sachant que le substrat organique est adapté pour l'utilisation en agriculture et en horticulture, sachant que la teneur en nutriments des déchets organiques ou du compost est réduite en ce que les déchets organiques sont lavés avec du dioxyde de carbone liquéfié, que les substances solides sont isolées du dioxyde de carbone liquéfié et sont acheminées au recyclage sous la forme d'un substrat organique.

2. Procédé selon la revendication 1,
sachant que les déchets organiques sont des résidus de fermentation provenant d'une installation de biogaz.

3. Procédé selon l'une quelconque des revendications 1 ou 2,
sachant que le nutriment est au moins un choisi parmi l'azote, le potassium et le phosphore.

4. Procédé selon l'une quelconque des revendications précédentes,
sachant que les déchets organiques ou le compost sont séchés avant qu'ils ne soient acheminés à une opération de lavage avec du dioxyde de carbone liquéfié.

5. Procédé selon la revendication 4,
sachant que de la chaleur résiduelle issue d'une installation de biogaz est utilisée aux fins du séchage.

6. Procédé selon l'une quelconque des revendications précédentes,
sachant qu'un dioxyde de carbone provenant d'une installation de biogaz est utilisé.

7. Procédé selon l'une quelconque des revendications précédentes,
sachant que le dioxyde de carbone est guidé dans le circuit.

8. Substrat organique, obtenu selon un procédé selon l'une quelconque des revendications 1 à 7,
sachant que le substrat organique présente, par rapport au produit de déchets organiques ou au compost, après la réalisation de l'opération de lavage, une teneur en nutriments réduite, sachant que le nutriment réduit est au moins un choisi parmi l'azote, le phosphore et le potassium.

9. Utilisation du substrat organique selon la revendication 8,
en tant que terreau pour plantes, terreau pour fleurs, tourbe de substitution, agents d'amendement de sol, substitut de fibres de bois,
en tant que litière, ou aux fins du traitement du papier.
